Europäisches Patentamt

(19) European Patent Office

Office européen des brevets

(11) Publication number: **0 098 655**
**B1**

(12) **EUROPEAN PATENT SPECIFICATION**

(45) Date of publication of patent specification: **29.10.86**

(21) Application number: **83200974.0**

(22) Date of filing: **30.06.83**

(51) Int. Cl.⁴: **C 09 D 3/66, C 08 L 67/06,
B 29 C 41/00, B 29 C 41/08**

(54) Coating powder.

(30) Priority: **02.07.82 NL 8202678**

(43) Date of publication of application:
**18.01.84 Bulletin 84/03**

(45) Publication of the grant of the patent:
**29.10.86 Bulletin 86/44**

(84) Designated Contracting States:
**AT BE CH DE FR GB IT LI LU NL SE**

(56) References cited:
**EP-A-0 001 865
EP-A-0 019 314
EP-A-0 019 947
FR-A-1 368 469
US-A-4 205 028**

**CHEMICAL ABSTRACTS, vol. 93, no. 8, 25th
August 1980, page 120, no. 73978e, Columbus,
Ohio, US**

(73) Proprietor: **DSM RESINS BV
Ceintuurbaan 5
NL-8022 AW Zwolle (NL)**

(72) Inventor: **Verwer, Andreas Nicolaas Jacobus
Ecrivissestraat 61
NL-6191 CJ Beek (L.) (NL)**
Inventor: **Evers, Johannes Theodorus Maria
Planetenbaan 50
NL-3951 EK Maarn (NL)**

(74) Representative: **Hoogstraten, Willem Cornelis
Roeland et al
OCTROOIBUREAU DSM Postbus 9
NL-6160 MA Geleen (NL)**

## Description

The invention relates to a powder that may be used to apply a coating to an object by in-mould coating.

This coating method, and the powders suitable for use therein, are described in US 4,288,113 and US 4,205,028. The object of the invention is to develop powders which are suitable in particular for the coating of thin-walled objects, for example car-body parts consisting of fibre-reinforced, hardened unsaturated polyester.

Such parts are manufactured mainly from sheet-moulding compound.

According to the invention, in a powderous coating agent on the basis of an unsaturated polyester resin with a hardening catalyst and, if desired, conventional other additives, the bonding agent consists of a mixture of:

a. 70—98 wt.% of one or more unsaturated polyester resins having a melting point of at least 70°C as measured with the ring-and-ball method, which are able to occur as a free-flowing powder at temperatures of up to 25°C, have a degree of unsaturation of at least 15% (calculated at wt.% maleic anhydride, referred to total polyester) and upon curing with styrene yield a product having an elongation at break of at most 10 %, and

b. 2—30 wt.% of one or more unsaturated polyester resins which upon curing with styrene yield a product having an elongation at break of at least 50 %, the amount and the melting point of component b) being such that the mixture of a) and b) has a melting point (ring-and-ball) of at least 40°C, and

c. 0—15 wt.% referred to the mixture of a) and b), of one or more copolymerizable monomers and/or prepolymers having a boiling point of at least 200°C.

The coating powders according to the invention are highly suitable for application in in-mould coating. The topcoat made thereof is of good continuity, adheres well to the hardened polyester which the coated object consists of, also upon bending thereof, and has a favourable combination of hardness and impact resistance.

The unsaturated polyester resin of type a) is a more or less conventional type of resin, obtained by condensation of one or more diols, and one or more dicarboxylic acids or anhydrides thereof, at least one of which is unsaturated. As diols, mention may be made of the aliphatic, cycloaliphatic or aromatic diols containing 2—18 carbon atoms, such as ethylene glycol, propylene glycol, 1,4-butene glycol, butanediol-1.4, neopentyl glycol, 1,4-cyclohexanedimethylol, 1.4-dimethylol benzene, hydrogenated bisphenol-A, diethylene glycol, dipropylene glycol, 1,4-cyclohexane diol and pentane diol. By preference, the hydroxyl component consists for the greater part of C2—4 diols. Possibly, a minor amount of mono-alcohol or a trifunctional alcohol may be incorporated. The carboxylic acid component consists of a mixture of one or more unsaturated dicarboxylic acids, such a maleic acid, fumaric acid, maleic anhydride, itaconic acid, and one or more aliphatic and/or aromatic dicarboxylic acids. By preference, a combination of carboxylic acids, is used in which besides the unsaturated dicarboxylic acid mainly an aromatic dicarboxylic acid is present, such as phthalic acid, isophthalic acid or terephthalic acid. If so desired, also monocarboxylic acids or tricarboxylic acids may be used in minor amounts.

The polyester should have a degree of unsaturation, expressed as the weight percentage of maleic anhydride used in the synthesis, of at least 15%. If a different dicarboxylic acid was used, for example itaconic acid, the degree of unsaturation can be calculated by conversion to the equimolar amount of maleic anhydride. By preference, the unsaturation is at least 20 wt.%. The starting materials used, their ratio and the degree of condensation are chosen so that the polyester resin has a melting point of at least 70°C (ring-and-ball) and can exist as a tack-free, free-flowing powder at a temperature of up to 25°C. The melting point is preferably between 70°C and 120°C, and generally lower than 150°C.

The unsaturated polyester should be curable to a relatively hard, possibly slightly brittle product. This can be investigated by dissolving the unsaturated polyester in styrene to form a 60 wt.% solution and curing in the usual manner using methyl ethyl ketone peroxide and cobalt octoate as the curing system. The elongation at break of such a cured product should be at most 10%, and is preferably at most 5%.

The resin b) functions as a flexibilizer in the system. It should be copolymerizable together with resin a) but in general has a lower degree of unsaturation. It is an unsaturated polyester, which means that the polymer chain contains ester bonds, but besides polyesters of the classic type also polyesters containing dimeric fatty acids, dicyclopentadiene derivatives, polyoxyalkylene diols, polyurethanes, polybutadiene polyols or polyacrylates with hydroxyl end groups can be used.

In the case of a composition of dicarboxylic acids and diols only, beside the necessary unsaturated dicarboxylic acids substantially aliphatic dicarboxylic acids are used as dicarboxylic acid. The diol component is then formed by, substantially, diethylene glycol, triethylene glycol, tetramethylene glycol or dipropene glycol. Upon curing together with styrene, the resin should yield a relatively flexible product with an elongation at break of at least 50% and preferably more than 75%.

The resins of type a) and type b) generally do not have a sharply defined melting point but rather have a softening range. Therefore, the melting point as determined by the ring-and-ball method according to ASTM E 2867 has been chosen as an indicator of the behaviour at higher temperatures.

As an indicator of the degree of brittleness or flexibility of the polyester, the elongation at break of the polyester cured with styrene has been given. Where possible, curing of a 60 wt.% solution of the polyester studied in styrene, with 2 wt.% methyl ethyl ketone peroxide and 0.5 wt.% cobalt acetate, at 25°C, with post-curing at 100°C, has been taken as the standard procedure. If possible, a 60 wt.% solution is used. If, however, the viscosity of such a solution becomes too high or the solubility of the polyester is too low, a lower concentration may be used of 50% or 55%. Similarly, too low a viscosity of the solution, or the preparation of a rubbery test product, can be avoided by using a higher polyester concentration of 70%.

The mixture of resins a) and b) consists for 70—98 wt.% of resin a). The ratio that is preferably chosen depends in part on the desired properties of the topcoat to be formed and on the type of rexin b), but will in very many cases be 75—90 % of resin a) and 10—25 wt.% of resin b).

Besides the resins a) and b), the bonding agent may as component c contain one or more monomers and/or prepolymers which can copolymerize with the resins a) and b). These monomers or prepolymers must have a boiling point of at least 200°C and should not, or only to a very small extent, be volatile or yield volatile products at the temperature of application (between 90 and 180°C).

The total amount of component c) is at most 15 wt.%, referred to a) and b) together, and is preferably at most 7 wt.%.

As component c), especially high-boiling trifunctional monomers having a cross-linking action are suitable, such as, for example, triallyl isocyanurate, triallyl, cyanurate or trimethylol propane triacrylate. Also difunctional monomers may be used, however, or copolymerizable prepolymers such as a diallyl phthalate prepolymer. In general, monomer or prepolymer are used only if this is necessary for obtaining special properties.

The coating powder contains a catalyst for the curing of the unsaturated compounds. Especially peroxides are used, such as, for example, hydroperoxides, ketone peroxides and per-esters. The amount of catalyst is usually 0.5—5 wt.%, referred to the unsaturated components. In addition, a conventional accelerator may be present, for example a cobalt compound or a solid amine. Further, the powder may contain release agents, flow agents, fillers, pigments, stabilizers etc. The various components of the powder may separately or in two or more premixes be ground to the desired particle size and then be mixed, or all components may be mixed together at a temperature at which all the organic components are liquid. Further details are mentioned in, inter alia, US 4,287,310 and US 4,228,113. In the case of mixing at elevated temperature in the presence of a peroxide, polymerization may already occur to a certain degree. Such coating powders, in which the components have already undergone a slight copolymerization, also form part of the invention. The particle size of the powder is usually between 0.01 and 0.20 mm, and preferably between 0.03 and 0.08 mm.

The powder is applied to the mould wall or walls, which have a temperature of between 80 and 180°C, preferably between 100 and 160°C. The powder melts and forms a continuous layer. The polymer is allowed to harden to such an extent that the layer can withstand some mechanical load but has not yet hardened completely, so that good adhesion to the polyester moulding compound is obtained.

The ultimate topcoat in general has a thickness of between 0.05 and 0.8 mm. The moulded object is in the half-mould method obtained by subsequently building up the walls of the object on top of the coat by applying unsaturated polyester and glass fibre, whether or not mixed, in several cycles and allowing the material to harden.

The mould wall provided with the coating may also be part of a mould in which objects are made from polyesters at elevated temperature and increased pressure, via the SMC or BMC technique.

The invention will be explained with reference to the following example, without being restricted to the mode of realization described therein.

Example 1

A number of unsaturated polyesters suitable for application in the process according to the invention were prepared in the following manner:

1. A resin A-1 was prepared by condensation of isophthalic acid, maleic anhydride and propylene glycol, in the molar ratio 1:1:2. The resin was prepared by the fusion-cook method and had an acid number of 30 (mg KOH/100 g of polymer), a melting point (ring-and-ball) of 85 and a viscosity, at 150°C, of 100 dPa · s.

Upon curing of a 60 wt.% solution of resin A-1 in styrene (at 25°C with the aid of 2 wt.% MEK peroxide and 0.5 wt.% cobalt octoate) a product was obtained which had an elongation at break of 1.3 %.

2. In the above-described manner, resin A-2 was prepared starting from maleic anhydride, 1,1' - isopropylidenebis - ( - p.phenyleneoxy) - dipropanol - 2 and neopentyl glycol, in the molar ratio 2:1:1.

The resin had an acid number of 20, a viscosity of 150 dPa · s. at 150°C and a melting point (ring-and-ball) of 100°C.

Curing of a 55 wt.% solution of resin A-2 in styrene yielded a product with an elongation at break of 2.4 % (a 60 wt.% solution is too viscous).

3. In the above-described manner, resin B-1 was prepared starting from maleic anhydride, phthalic anhydride, adipic acid, ethylene glycol, 1,3-dihydroxypropane and pentaerythritol, in the molar ratio 2:3:6:7:4.5:0.3. The acid number was 20, the viscosity at 100°C as 25 dPa · s and the polyester was an extremely viscous mass at room temperature. Curing of a 70 wt.% solution of this polyester in styrene yielded a product with an elongation at break at 70%.

4. The resin B-2 was prepared by modification of the unsaturated polyester with a diisocyanate. First, a polyester with hydroxyl end groups was prepared as described above, on the basis of neopentyl glycol, adipic acid and maleic anhydride, in a molar ratio of 6:5:1. This polyester was next reacted with diphenylmethane diisocyanate (MDI), the NCO/OH ratio being 0.5.

The resin B-2 thus formed has a viscosity of 40 dPa · s at 100°C. Curing of a 60 wt.% solution in styrene yields a product with an elongation at break of 90%.

A powder was formulated by mixing in the manner described in US Patent 4,287,310, 85 parts by weight of polyester A-1, 12 parts by weight of polyester B-2, 3 parts by weight of triallyl cyanurate, 2 parts by weight of t-butyl-perbenzoate, 0.4 parts by weight of cobalt octoate, 2 parts by weight of zinc stearate and 10 parts by weight of silica. The product thus obtained could be ground and screened to a mean particle size of between 0.03 and 0.08 mm, a fraction which was free-flowing at room temperature. It could successfully be used in in-mould coating according to US Patent 4,228,113. Using this procedure, it was possible to press from an SMC a polyester sheet of 3 mm thickness, provided with a topcoat bending with the sheet without surface defects. Such a result could also be obtained with powders on the basis of resins A-1 plus B-1 and A-2 plus B-2, respectively.

## Claims

1. Powderous coating agent on the basis of an unsaturated polyester resin with hardening catalyst and, if so desired, other conventional additives, characterized in that the bonding agent in the powder consists of a mixture of:

a) 70—98 wt.% of one or more unsaturated polyester resins having a melting point of at least 70°C as measured with the ring-and-ball method, which are able to occur as a free-flowing powder at temperatures of up to 25°C, have a degree of unsaturation of at least 15 (calculated as wt.% maleic anhydride, referred to total polyester) and upon curing with styrene yield a product having an elongation at break of at most 10 %, and

b) 2—30 wt.% of one or more unsaturated polyester resins which upon curing in combination with styrene yield a product having an elongation at break of at least 50 %, the amount and the melting point of component b) being such that a mixture of a) and b) has a melting point (ring-and-ball) of at least 40°C, and

c) 0—15 wt.%, referred to the mixture of a) and b), of one or more copolymerizable monomers and/or prepolymers having a boiling point of at least 200°C.

2. Powderous coating agent according to claim 1, characterized in that the unsaturated polyester resin a) upon curing with styrene yields a product with an elongation at break of less than 5%.

3. Powderous coating agent according to claims 1 and 2, characterized in that the polyester resin a) has a degree of unsaturation of at least 20 wt.%.

4. Powderous coating agent according to claim 1—3, characterized in that the polyester resin b) upon curing with styrene yields a product having an elongation at break of at least 75 %.

5. Powderous coating agent according to claim 1—4, characterized in that it contains 75—90 wt.% of polyester a) and 10—25 wt.% of polyester b).

6. Powderous coating agent according to claims 1—5, characterized in that between 0 and 7 wt% of one or more high-boiling monomers and/or prepolymers are present referred to the overall amount of polyesters a) and b).

7. Powderous coating agent according to claims 1—6, characterized in that it has been obtained by intimately mixing the several components at a temperature above the melting point of the polyesters, the hardening catalyst being added last and the mixture being cooled immediately afterwards and being ground, if necessary, to a particle size of between 0.01 mm and 0.2 mm.

8. Process for making objects by curing of an unsaturated polyester mixed, if so desired, with fillers and/or reinforcing materials, in or on a suitable mould, the wall of the mould first being provided along at least part of its surface with a coating, characterized in that the coating has been obtained by applying a powder according to any of the claims 1—7 to the mould wall and allowing it to cure to a not fully hardened layer.

## Patentansprüche

1. Pulverbeschichtungsmittel auf der Basis eines ungesättigten Polyesterharzes mit Härtekatalysator und, gewünschtenfalls, anderen herkömmlichen Zusätzen, dadurch gekennzeichnet, daß das Bindemittel im Pulver aus einem Gemisch von:

a) 70—98 Gew.-% eines oder mehrerer ungesättigter Polyesterharze mit einem Schmelzpunkt von wenigstens 70°C, gemessen mit der Ring-und-Kugel-Methode, die befähigt sind, als freifließende Pulver bei einer Temperatur von bis zu 25°C vorzuliegen, einen Unsättigungsgrad von wenigstens 15 (berechnet als Gew.-% Maleinsäureanhydrid, bezogen auf den gesamten Polyester) besitzen und beim Härten mit Styrol ein Produkt mit einer Bruchdehnung von höchstens 10% ergeben, und

b) 2—30 Gew.-% eines oder mehrerer ungesättigter Polyesterharze, die beim Härten in Kombination mit Styrol ein Produkt mit einer Bruchdehnung von wenigstens 50% ergeben, wobei die Menge und der Schmelzpunkt der Komponente b) derart sind, daß ein Gemisch von a) und b) einen Schmelzpunkt (Ring-und-Kugel) von wenigstens 40°C besitzt, und

c) 0—15 Gew.-%, bezogen auf das Gemisch von a) und b), eines oder mehrerer copolymerisierbarer Monomere und/oder Vorpolymere mit einem Siedepunkt von wenigstens 200°C, besteht.

2. Pulverbeschichtungsmittel nach Anspruch 1, dadurch gekennzeichnet, daß das ungesättigte Polyesterharz a) beim Härten mit Styrol ein Produkt mit einer Bruchdehnung von weniger als 5% ergibt.

3. Pulverbeschichtungsmittel nach den Ansprüche 1 und 2, dadurch gekennzeichnet, daß das Polyesterharz a) einen Unsättigungsgrad von wenigstens 20 Gew.-% besitzt.

4. Pulverbeschichtungsmittel nach den Ansprüchen 1—3, dadurch gekennzeichnet, daß das Polyesterharz b) beim Härten mit Styrol ein Produkt mit einer Bruchdehnung von wenigstens 75% ergibt.

5. Pulverbeschichtungsmittel nach den Ansprüchen 1—4, dadurch gekennzeichnet, daß es 75—90 Gew.-% Polyester a) und 10—25 Gew.-% Polyester b) enthält.

6. Pulverbeschichtungsmittel nach den Ansprüchen 1—5, dadurch gekennzeichnet, daß zwischen 0 und 7 Gew.-% eines oder mehrerer hochsiedender Monomere und/oder Vorpolymere, bezogen auf die Gesamtmenge an Polyester a) und b), zugegen sind.

7. Pulverbeschichtungsmittel nach den Ansprüchen 1—6, dadurch gekennzeichnet, daß es durch inniges Vermischen der verschiedenen Komponenten bei einer Temperatur oberhalb des Schmelzpunktes der Polyester erhalten wurde, wobei der Härtekatalysator zuletzt zugegeben und das Gemisch unmittelbar danach abgekühlt und erforderlichenfalls zu einer Teilchengröße zwischen 0,01 mm und 0,2 mm gemahlen wird.

8. Verfahren zur Herstellung von Gegenständen durch Härten eines gewünschtenfalls mit Füllstoffen und/oder Verstärkungsmaterialien vermischten ungesättigten Polyesters in oder auf einer geeigneten Form, wobei zuerst die Wand der Form zumindest auf einem Teil ihrer Oberfläche mit einem Überzug versehen wird, dadurch gekennzeichnet, daß der Überzug erhalten wird, indem man ein Pulver nach einem der Ansprüche 1 bis 7 auf die Formwand aufbringt und zu einer nicht voll ausgehärteten Schicht härten läßt.

**Revendications**

1. Agent de revêtement pulvérulent à base de résine de polyester insaturé avec catalyseur durcisseur et, si désiré, d'autres additifs usuels, caractérisé par le fait que l'agent liant dans la poudre est constitué par un mélange de:

a) 70—98% en poids d'une ou plusieurs résines de polyester insaturé ayant un point de fusion d'au moins 70°C mesuré selon la méthode bille et anneau, pouvant se comporter comme une poudre ne s'agglomérant pas à das températures allant jusqu'à 25°C, qui ont un degré d'insaturation d'au moins 15 (calculé en % en poids d'anhydride maléique rapporté au polyester total) et qui à la cuisson avec le styrène donne un produit ayant un allongement à la rupture d'au plus 10%, et

b) 2—30% en masse d'une ou plusieurs résines de polyester insaturé qui, à la cuisson avec le styrène donne un produit ayant un allongement à la rupture d'au moins 50%, la quantité et le point de fusion du composé b) étant tels que le mélange de a) et de b) a un point de fusion méthode bille et anneau d'au moins 40°C, et

c) 0—15% en poids rapporté au mélange a) et b) d'un ou plusieurs monomères copolymérisables et/ou des prépolymères ayant un point d'ébullition d'au moins 200°C.

2. Agent de revêtement pulvérulent selon la revendication 1, caractérisé en ce que la résine de polyester insaturé a), à la cuisson avec le styrène, donne un produit ayant un allongement à la rupture de moins de 5%.

3. Agent de revêtement pulvérulent selon les revendications 1 et 2, caractérisé en ce que la résine polyester a) a un degré d'insaturation d'au moins 20% en poids.

4. Agent de revêtement pulvérulent selon l'une des revendications 1 à 3, caractérisé en ce que la résine polyester b), à la cuisson avec le styrène donne un produit ayant un allongement à la rupture d'au moins 75%.

5. Agent de revêtement pulvérulent selon les revendications 1 à 4, caractérisé en ce qu'il contient 75—90% en poids de polyester a) et 10—25% en poids de polyester b).

6. Agent de revêtement pulvérulent selon les revendications 1 à 5, caractérisé en ce que un ou plusieurs monomères et/ou prépolymères à haut point d'ébullition sont présents en raison de 0 à 7% en poids rapportés à la quantité totale de polyester a) et b).

7. Agent de revêtement pulvérulent selon les revendications 1 à 6, caractérisé en ce qu'il est obtenu en mélangeant intimement les différents composants à une température supérieure au point du fusion des polyesters, le catalyseur durcisseur étant ajouté en dernier et le mélange étant refroidi immédiatement après et broyé, si nécessaire, en particule de taille comprises entre 0,01 mm à 0,2 mm.

8. Procédé de fabrication d'objet par cuisson de polyester insaturés, mélangés, si désiré, avec des charges et/ou des matériaux de renforcement, dans ou sur un moule convenable, la paroi du moule ayant d'abord été au moins en partie, pourvue de revêtement, caractérisé par le fait que le revêtement a été obtenu en appliquant une poudre selon l'une des revendications 1 à 7 sur la paroi du moule et en la laissant cuire en une couche non totalement durcie.